# EUROPÄISCHE PATENTSCHRIFT

(11) **EP 1 476 003 B1**
(45) Veröffentlichungstag und Bekanntmachung des Hinweises auf die Patenterteilung: **06.08.2008**
(21) Anmeldenummer: 04008068.1
(22) Anmeldetag: 02.04.2004
(51) Int. Cl.: H05B 41/38, H05B 41/392

(54) **Betriebsgerät und Verfahren zum Betreiben von Gasentladungslampen**
Power supply and method for driving discharge lamps
Circuit d'alimentation et méthode pour l'alimentation de lampes à décharge gazeuse

(30) Priorität: 02.05.2003 DE 10319950
(43) Veröffentlichungstag der Anmeldung: 10.11.2004
(73) Patentinhaber: Patent-Treuhand-Gesellschaft für elektrische Glühlampen mbH, 81543 München (DE)
(72) Erfinder: Breuer, Christian, 81735 München (DE); Huber, Andreas, 82216 Maisach (DE); Weidemann, Ralf, Dr., 14532 Stahnsdorf (DE)
(74) Vertreter: Raiser, Franz

(56) Entgegenhaltungen:
- US-A- 5 481 163
- US-A- 5 907 742
- US-A- 6 051 939
- US-A- 6 153 987

## Beschreibung

### Technisches Gebiet

Die Erfindung betrifft ein Betriebsgerät und ein Verfahren zum Betreiben von Gasentladungslampen mit Elektroden. Insbesondere löst die Erfindung Probleme, die beim Anlauf von Gasentladungslampen auftreten.

### Stand der Technik

Gasentladungslampen müssen durch eine hohe Spannung gezündet. Nach der Zündung erwärmt sich die Lampe während einer Anlaufphase von einer Starttemperatur auf eine Betriebstemperatur. Die Spannung, die nach der Zündung an einer Gasentladungslampe anliegt, wird Brennspannung genannt und ist in weiten Grenzen nicht wesentlich vom Lampenstrom abhängig. Die Brennspannung steigt während der Anlaufphase von einer Startbrennspannung bis zu einer Betriebsbrennspannung. Der Anlaufphase schließt sich bei bestimmungsgemäß funktionierenden Gasentladungslampen eine Betriebsphase an.

In der Lampentechnik wird zwischen Hoch- und Niederdruckgasentladungsalmpen unterschieden. Bei Hochdruckgasentladungslampen im folgenden auch Lampen genannt, ist für die Funktionsweise wesentlich, dass während der Anlaufphase der Druck im Lampengefäß von einem Anfangsdruck bis zu einem Betriebsdruck ansteigt. Dies ist ein Grund, weshalb die im folgenden beschriebene Erfindung besonders vorteilhaft bei Hochdruckgasentladungslampen eingesetzt werden kann. Jedoch ist auch ein Einsatz bei Niederdruckgasentladungsalmpen möglich.

In der Schrift US 5,481,163 (Nakamura) ist eine Steuerschaltung für einen Lampenstrom offenbart. Aufgabe der Steuerschaltung ist es dabei, beim Hochlaufen einer Entladungslampe möglichst konstanten Lichtstrom zu erzeugen. Dazu wird die Lampenleistung von einer zunächst hohen Leistung auf eine Sollleistung kontrolliert reduziert.

In der Schrift US 6,051,939 (Eckert) ist ein Verfahren und eine Vorrichtung zum Regeln der Leistung einer Hochdruck-Gasentladungslampe offenbart. Das Verfahren geht aus von einer Leistungsregelung mit Hilfe einer VEDILIS Kennlinie, wie sie aus der Anwendung von Hochdruck-Gasentladungslampen zur Fahrzeugbeleuchtung bekannt ist. Damit bei einer gewünschten Leistungsänderung nicht mehrere Kennlinien gespeichert sein müssen, wird in der Schrift vorgeschlagen, nur eine Kennlinie zu verwenden und diese entsprechend der gewünschten Leistungsänderung durch Versatzwerte zu verschieben.

Während der Betriebsphase ist es üblich, daß das Betriebsgerät die Leistung der Lampe auf eine Sollleistung regelt. Da während der Anlaufphase die Brennspannung niedrig ist, wäre bei reiner Leistungsregelung während der Anlaufphase ein hoher Lampenstrom nötig, um die Sollleistung einzustellen. Dieser Strom kann um ein vielfaches höher sein als der Lampenstrom während der Betriebsphase. Dies würde zu einer Zerstörung der Elektroden der Lampe führen. Deshalb wird im Stand der Technik der Strom den das Betriebsgerät während der Anlaufphase an die Lampe liefert auf einen konstanten Anlaufstrom begrenzt. Damit wird zumindest während eines ersten Abschnitts der Anlaufphase die Lampe mit dem konstanten Anlaufstrom gespeist. Im Verlauf der Anlaufphase steigt die Brennspannung. Erreicht die Brennspannung einen Wert der zusammen mit dem konstanten Strom die gewünschte Sollleistung ergibt, so beginnt die Leistungsregelung zu arbeiten. Beim weiteren Anstieg der Brennspannung wird durch die Leistungsregelung der Lampenstrom so weit reduziert, dass sich die Sollleistung einstellt. Die Anlaufphase ist abgeschlossen, wenn die Brennspannung den Wert der Betriebsbrennspannung erreicht hat. Die Bertriebsbrennspannung weist Exemplarstreuungen auf und ändert sich auch während der Lebensdauer einer Lampe. Die Betriebsbrennspannung wird daher definiert durch die Brennspannung die bei Sollleistung während eines Zeitbereichs im wesentlichen konstant bleibt. Der zu betrachtende Zeitbereich liegt beispielsweise bei einer Minute. Korreliert mit der Betriebsbrennspannung ist ein Betriebslampenstrom, der zusammen mit der Betriebsbrennspannung die Sollleistung ergibt.

Für den Wert des Anlaufstroms ist folgendes zu beachten: Während der Anlaufphase muß soviel Leistung in die Lampe eingekoppelt werden, dass der Druck in der Lampe und damit die Lampenspannung stetig ansteigt, bis die Betriebsbrennspannung erreicht ist. Andernfalls kann der Fall eintreten, dass die Lampe während der Anlaufphase in einem stabilen Zustand verharrt und die Sollleitung nicht erreicht wird. Um diesen Fall sicher auszuschließen, wird im Stand der Technik ein Anlaufstrom gewählt, der deutlich über dem Betriebslampenstrom liegt. Dies wird in der Schrift US 5,083,065 (Sakata) dargestellt. Ein Aspekt bei der Wahl des Anlaufstroms ist auch der Wunsch nach einer möglichs kurzen Anlaufphase, um in möglichst kurzer Zeit einen Solllichtstrom zu erreichen.

Ein hoher Anlaufstrom stellt jedoch eine starke Belastung der Elektroden dar, was zu Schädigung der Elektroden führt und damit die Lebensdauer einer Lampe reduziert. Geschädigt werden die Elektroden entweder durch Überhitzung, was zu Aufschmelzen und Abbrand führt oder durch sogenanntes Sputtern, das veruracht wird durch Ionen, die mit hoher Geschwindigkeit eine Elektode treffen.

Weitere Betriebsgeräte des Stands der Technik sind aus den Druckschriften US 5,481,163 und US 6,051,939 bekannt.

### Darstellung der Erfindung

Es ist Aufgabe der vorliegenden Erfindung, ein Betriebsgerät und ein Verfahren zum Betrieb von Gasentladungslampen bereit zu stellen, das eine Anlaufphase aufweist, die einerseits sicher stellt, dass die Lampe in eine Betriebsphase geführt wird und andererseits eine minimale Belastung der Elektroden bewerkstelligt.

Diese Aufgabe wird durch ein Betriebsgerät zum Betrieb von Gasentladungslampen gelöst, das folgende Merkmale aufweist:
- Eine Regeleinrichtung, die dazu geeignet ist, die Leistung von angeschlossenen Gasentladungslampen auf eine Sollleistung zu regeln,
- eine Stelleinrichtung die dazu geeignet ist, einen Lampenstrom von angeschlossenen Gasentladungslampen auf einen Grenzwert zu begrenzen,
- eine Detektionseinrichtung, die so ausgelegt ist, dass sie an eine Steuereinrichtung ein Signal abgibt, falls eine Grenzwerteinstellung zu gering ist, um eine angeschlossene Lampe in einen Zustand zu versetzen, bei dem die Lampe die Sollleistung aufnimmt,
- die Steuereinrichtung ist so ausgelegt, dass sie der Stelleinrichtung den Grenzwert vorgibt und den Grenzwert erhöht, falls die Detektionseinrichtung Signal an die Steuereinrichtung sendet.

Besonders vorteilhafte Ausgestaltungen der Erfindung finden sich in den abhängigen Ansprüchen.

Insbesondere bei sogenannten Ultra-Hochdrucklampen, die vorwiegend in Projektionsanwendungen wie z. B. Beamer eingesetzt werden, hat sich gezeigt, dass die Feinstruktur der Elektroden-Oberfläche wesentlichen Einfluss auf die Lebensdauer und das Flackern der Lampe hat. In der Schrift DE 100 21 537 (Derra) sind derartige Feinstrukturen beschrieben. Diese Feinstrukturen werden entweder bei der Fertigung der Lampe erzeugt oder sie ergeben sich durch einen dafür geeigneten Betrieb der Lampe während der Betriebsphase. Die hier beschriebene Erfindung verhindert, dass die genannten Feinstrukturen in der Anlaufphase durch einen überhöhten Anlaufstrom zerstört werden.

Erfindungsgemäß beginnt die Anlaufphase mit einem niedrigen Anlaufstrom, dessen Wert so gewählt wird, dass eine Schädigung der Elektroden einer angeschlossenen Lampe ausgeschlossen ist. Wird mit dem zunächst eingestellten Anlaufstrom kein Zustand der Lampe erreicht, bei dem die Lampe die Sollleistung aufnimmt, so wird erfindungsgemäß der Anlaufstrom erhöht.

### Kurze Beschreibung der Zeichnungen

Im folgenden soll die Erfindung anhand von Ausführungsbeispielen unter Bezugnahme auf Zeichnungen näher erläutert werden. Es zeigen:
- Figur 1: Blockschaltbild eines Ausführungsbeispiels für ein erfindungsgemäßes Betriebsgerät,
- Figur 2: Diagramm, das die Abhängigkeit des Lampenstroms und der Lampenleistung von der Brennspannung bei unterschiedlichem Anlaufverhalten darstellt.
- Figur 3: Diagramm, das die Abhängigkeit der Lampenstromänderung in der Zeit von der Brennspannungsänderung in der Zeit darstellt.

### Bevorzugte Ausführung der Erfindung

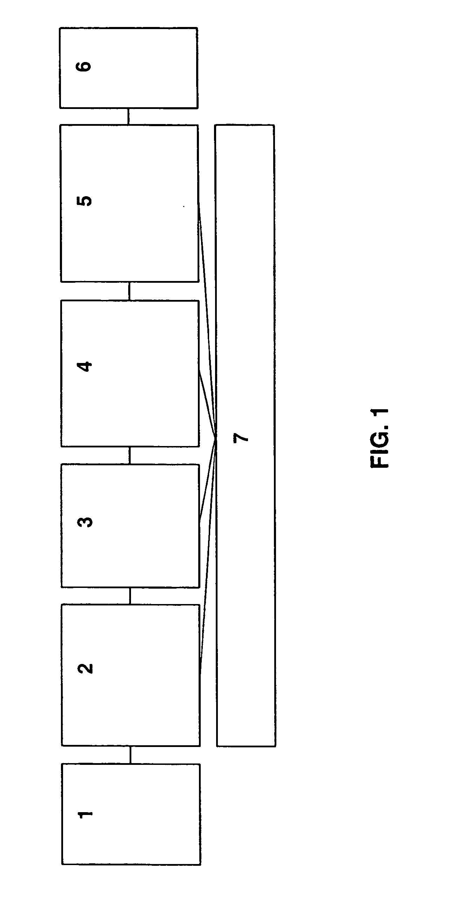

In Figur 1 ist ein Blockschaltbild eines Ausführungsbeispiels für ein erfindungsgemäßes Betriebsgerät dargestellt, das zum Betrieb von Hochdruck-Gasentladungslampen geegnet ist. Der grundsätzliche Aufbau und die grundsätzliche Funktionsweise eines derartigen Betriebsgeräts ist in der Schrift WO 95/35645 (Derra) beschrieben. Im folgenden werden die einzelnen Blöcke kurz beschrieben.

Block 1 enthält eine Gleichspannungsversorgung, die ihre Energie im allgemeinen aus einer Netzspannungsversorgung bezieht. Der Wert der geliefeten Gleichspannung liegt über der Brennspannung einer angeschlossenen Lampe 6.

Die Gleichsapnnungsversorgung speist einen Tiefsetzer 2, der den von der Gleichspannungsversorgung gelieferten Spannungswert auf einen Wert abtransformiert, der der Brennspannung einer angeschlossenen Lampe 6 entspricht. Der Tiefsetzer 2 enthält eine Stelleinrichtung, mit der der Lampenstrom eingestellt werden kann. Dies geschieht durch die Wahl der Spannung, die am Ausgang des Tiefsetzers eingestellt wird.

Eine Einstellmöglichkeit besteht meist durch eine sogenannte Pulsweitenmodulation (PWM). Diese bestimmt das Verhältnis von Einschalt- zu Ausschaltdauer von elektronischen Schaltern, die im Tiefsetzer 2 enthalten sind.

Die Ausgestaltung des Tiefsetzers 2 kann der allgemeinen Literatur zur Leistungselektronik entnommen werden. In WO 95/35645 (Derra) ist eine Topologie mit einem Schalter gewählt. Es ist jedoch auch eine Ausführung mit mehreren Schaltern möglich, wie sie z. B. eine Halbbrücke darstellt. Der Tiefsetzer 2 enthält eine Drossel, die als Strombegrenzung dient. Damit bekommt der Tiefsetzer 2 eine Charakteristik die einer einstellbaren Stromquelle für den Lampenstrom entspricht.

Je nach gewählter Topologie liefert der Tiefsetzter 2 einen Gleichstrom oder einen Wechselstrom. Für den Fall, dass der Tiefsetzer 2 einen Wechselstrom liefert, wird der Ausgang des Tiefsetzers 2 in einen Gleichrichter 3 eingespeist, der an seinem Ausgang einen Gleichstrom liefert. Der Gleichrichter 3 kann entfallen, falls der Tiefsetzer 2 einen Gleichstrom liefert.

Der Gleichstrom aus dem Gleichrichter 3 oder dem Tiefsetzer 2 wird in eine Vollbrücke 4 eingespeist, die den Gleichstrom in einen rechteckförmigen Wechselstrom umformt. Die Frequenz des rechteckförmigen Wechselstroms ist im Vergleich zu üblichen Frequenzen bei denen der Tiefsetzer 2 arbeitet niederig und liegt bei Werten zwischen 50 Hz und 1 kHz. Die Umformung in rechteckförmigen Wechselstrom ist bei Anwendungen nötig, die Wechselstromlampen betreiben und einen gleichförmigen Lichtstrom benötigen. Beispiele für derartige Anwendungen sind Beamer und Rückprojektionsfernseher. Der erfindungsgemäße, elektrodenschonende Anlauf der Lampe, kann jedoch auch auf Gleichstromlampen oder auf Wechselstromlampen, die mit nicht rechteckförmigem Wechselstrom betreiben werden, angewendet werden. Je nach Anwendung kann demnach der Block 3 oder 4 oder beide entfallen.

Zwischen die Vollbrücke 4 und die Lampe 6 ist eine Zündeinheit 5 geschaltet, die die zur Zündung der Lampe nötige Spannung liefert. Nach der Zündung der Lampe übernimmt die Zündeinheit 5 üblicherweise keine Funktion mehr.

Eine Kontrolleinheit 7 ist mit mit dem Tiefsetzer 2, dem Gleichrichter 3, der Vollbrücke 4 und der Zündeinheit 5 verbunden. Die Kontrolleinheit 7 enthält die Steuereinrichtung, die Regeleinrichtung, die Detektionseinrichtung sowie Messeinrichtungen zur Erfassung von Betriebsparametern (z.B. Brennspannung, Lampenstrom) und eine Einrichtung zum Speichern von lampentypischen Daten und Kennlinien. Die einzelnen Einrichtungen sind in der Kontrolleinheit 7 zusammengefasst, da die Kontrolleinheit 7 meist einen Microkontroller enthält, der die Funktion mehrerer oder aller Einrichtungen in sich vereint. In vielen Fällen ist auch die Realisierung einer Einrichtung entweder durch Hardware oder durch Software möglich. In zunehmendem Maße werden Steuer- und Regelaufgaben durch Software übernommen, da diese Lösung kostengünstig und flexibel ist.

Alle Verbindungen, die zur Kontrolleinheit 7 führen, können sowohl Ein- als auch Ausgänge sein. Als Eingänge geschaltet können die Verbindungen Information über die Brennspannung und über den Lampenstrom beliebig aus einem der Blöcke 2-5 der Kontrolleinheit 7 zuführen.

Als Ausgänge geschaltet steuern die Verbindungen koordiniert duch die Kontrolleinheit 7 Zündung, Anlauf, Betrieb und Abschalten des Betriebsgeräts.

Die Regeleinrichtung, die in der Kontrolleinheit 7 enthalten ist, berechnet aus dem Lampenstrom und der Brennspannung die Lampenleistung und vergleicht sie mit einer abgespeicherten Sollleistung für die zu betreibende Lampe. Ist die Lampenleistung geringer als die Sollleistung, so erhöht die Steuereinrichtung über die Stelleinrichtung den Lampenstrom so lange, Lampenleistung und Sollleistung übereinstimmen.

Für einen erfindungsgemäßen Anlauf stellt die Steuereinrichtung, die in der Kontrolleinheit 7 enthalten ist, über eine Stelleirichtung, die im Tiefsetzer 2 enthalten ist, nach der Zündung zunächst einen Grenzwert für den Lampenstrom ein. Die Lampe befindet sich in der Anlaufphase weshalb der Lampenstrom in dieser Phase auch Anlaufstrom genannt wird. Erfindungsgemäß ist der Grenzwert so gewählt dass eine Schädigung der Elektroden ausschgeschlossen ist. Der Grenzwert ist abhängig von der Lampe, die betrieben werden soll. Ein meist aus Versuchsreihen ermittelter Wert ist in der Kontrolleinheit 7 abgespeichert.

Der Grenzwert kann während der Anlaufphase konstant sein, was eine einfache Realisierung ermöglicht. Es hat sich jedoch gezeigt, dass ein bezüglich der Belastung der Elektroden und der Stabilität des Plasmabogens der Lampe der Anlauf optimiert werden kann, wenn der Grenzwert für den Lampenstrom abhängig von der Brennspannung gewählt wird. Die optimale Abhängigkeit wird in Versuchen ermittelt und in Form einer Kennlinie in der Kontrolleinheit 7 abgespeichert.

Mittels einer Messeinrichtung ermittelt also die Kontrolleinheit 7 zunächst die Brennspannung und stellt den dazugehörigen optimalen Grenzwert für den Lampenstrom ein. Im Lauf der Anlaufphase erhöht sich die Brennspannung immer weiter und erreicht im Idealfall einen Wert, der zu einer Lampenleistung führt, die der Sollleistung entspricht und die Lampe schließlich in die Betriebsphase übergeht. Eine Änderung des konstanten oder von der abgespeicherten Kennlinie vorgegebenen Grenzwerts ist in diesem Idealfall nicht nötig.

Um die Elektroden zu schonen wird jedoch ein möglichst niedriger Grenzwert gewählt, der zu einem Fall führen kann, der vom Idealfall abweicht. Die Leistung, die im nicht idealen Fall in der Lampe umgesetzt wird ist so gering, dass die Brennspannung nicht soweit ansteigt, dass in der Lampe die Sollleistung erreicht. Vielmehr verharrt die Brennspannung auf einem Wert und steigt nicht mehr weiter an.

Erfindungsgemäß erkennt eine Detektionseinrichtung diesen Fall und gibt ein Signal an die Steuereinrichtung. Diese veranlasst eine Erhöhung des Grenzwerts, worauf die Brennspannung wieder zu steigen beginnt. Meist genügt eine einmalige Erhöhung des Grenzwerts, um die Lampe in die Betriebsphase zu führen. Es ist jedoch auch möglich, dass die Detektionseinrichtung mehrmals erkennt, dass die Lampe die Sollleistung nicht erreichen wird und eine weitere Erhöhung des Grenzwerts über ein Signal an die Steuereinrichtung auslöst.

Eine Erhöhung des Grenzwerts kann derart ausgestaltet sein, dass die Steuereinrichtung der Stelleinrichtung ausgehend von einem konstantem Grenzwert einen höheren konstanten Grenzwert vorgibt. Diese Lösung kann einfach realisiert werden.

Um sicher zu gehen, dass nach dem ersten Empfang eines Signals der Detektionseinrichtung die Lampe in die Betriebsphase übergeht kann nach dem ersten Empfang eines Signals der Detektionseinrichtung die Steuereinrichtung auch so ausgelegt werden, dass sie der Stelleinrichtung einen schrittweise oder kontinuierlich ansteigenden Grenzwert vorgibt.

Wie oben beschrieben sind auch Steuereinrichtungen möglich, bei denen der Grenzwert über eine abgespeicherte Kennlinie von der Brennspannung abhängt. Bei einer derartigen Steuereinrichtung löst ein Signal der Detektionseinrichtung ein Abweichen von der abgespeicherten Kennlinie aus. Die Kontrolleinheit 7 kann mehere abgespeicherte Kennlinien aufweisen, wobei jeweils eine aktiv geschaltet und für die Steuereinrichtung gültig ist. Begonnen wird die Anlaufphase mit einer Kennlinie, die die niedrigsten Grenzwerte aufweist. Bei Empfang eines Signals von der Detektionseinrichtung schaltet die Steuereinrichtung eine weitere Kennlinie aktiv, die höhre Grenzwerte aufweist. Diese Realisierung der vorliegenden Erfindung ist zwar aufwändiger, als das jeweilige Einstellen konstanter Grenzwerte, ermöglicht aber einen Anlauf der Lampe, wie er anhand von Versuchsreihen, die mit der betreffenden Lampe durchgeführt wurden, optimal ist. Als Kriterien dafür werden herangezogen:
- Geringst mögliche Schädigung der Elektroden und damit maximale Lebensdauer
- Kurze Anlaufphase
- Stabilität des Plasmabogens in der Lampe

Für die Ausführung der Detektionseinrichtung gibt es mehrere Möglichkeiten:

Bei einer einfachen Ausführung der Detektionseinrichtung misst eine Zeitmesseinrichtung die Zeit, die seit dem Beginn der Anlaufphase verstrichen ist. Nach einer voreingestellten Zeit, gibt die Detektionseinrichtung ein Signal an die Steuereinrichtung. Die voreingestellte Zeit wird in der Regel durch Versuchsreihen mit der zu betreibenden Lampe bestimmt. Hat die Lampe nach der voreingestellten Zeit die Sollleistung noch nicht erreicht, so wird mittels der Steuereinrichtung ein höherer Grenzwert wirksam. Hat die Lampe nach der voreingestellten Zeit die Sollleistung bereits erreicht, so würde die Steuereinrichtung zwar einen höheren Lampenstrom zulassen, die Regeleinrichtung stellt jedoch einen Lampenstrom ein, der zusammen mit der Brennspannung die Sollleistung ergibt.

Eine weitere Möglichkeit zur Ausführung der Detektionseinrichtung besteht darin, dass die Detektionseinrichtung den Anstieg der Brennspannung erfasst. Je schneller die Brennspannung ansteigt, desto größer ist die Wahrscheinlichkeit, dass die Lampe in die Betriebsphase übergeht. Sobald der Anstieg der Brennspannung unter einem vorgegebenem Wert liegt, sendet die Detektionseinrichtung ein Signal an die Steuereinrichtung. Der vorgegebene Wert für den Anstieg der Brennspannung wird in der Regel durch Versuchsreihen mit der zu betreibenden Lampe bestimmt. Gegenüber der zuerst beschrieben Ausführung der Detektionseinrichtung hat die zweite Ausführung den Vorteil, dass sie früher erkennen kann, dass ein eingestellter Grenzwert zu niedrig ist und somit die Anlaufphase verkürzen werden kann.

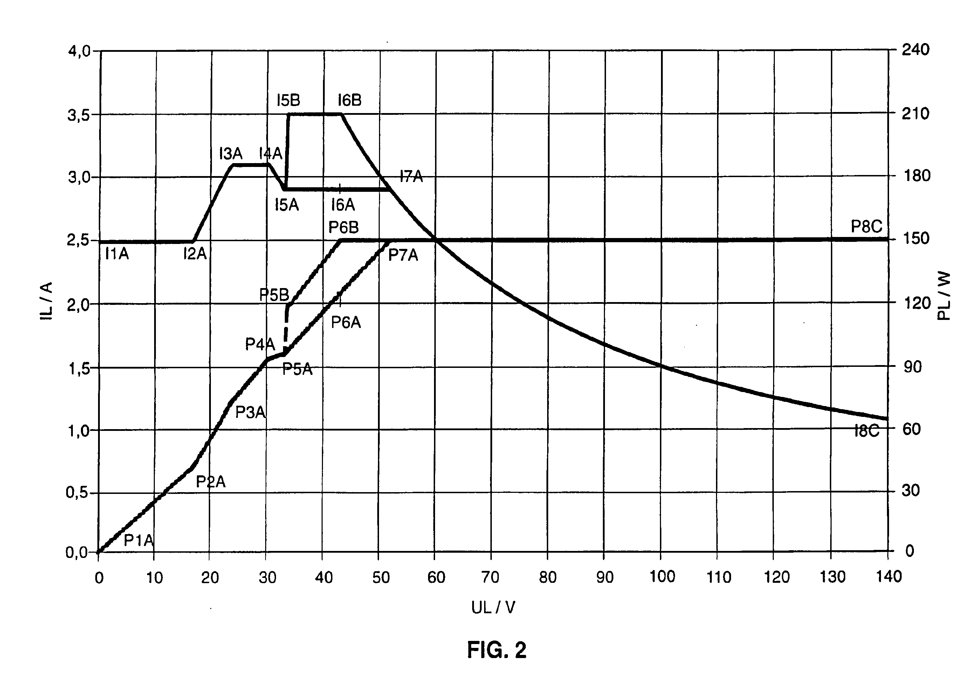

In Figur 2 ist beispielhaft ein Diagramm darstellt, das die Abhängigkeit des Lampenstroms und der Lampenleistung von der Brennspannung zeigt. Dargetellt sind zwei Fälle mit unterschiedlichem Anlaufverhalten, gesteuert durch zwei unterschiedliche Kennlinien.

Auf der Abszisse ist die Brennspannung UL in Volt angegeben. Auf der linken Ordinate ist der Lampenstrom IL in Ampere und auf der rechten Ordinate die Lampenleistung PL in Watt angegeben.

Zunächst wird die Abhängigkeit des Lampenstroms von der Brennspannung erläutert. Beginnend bei einer Brennspannung von 0V bis ca. 17V schreibt eine abgespeicherte Kennlinie A für den Lampenstrom einen konstanten Grenzwert von 2,5A vor. Dies wird durch das Kennlinienstück zwischen den Punkten I1A und I2A beschrieben. Steigt die Brennspannung im Punkt I2A über einen Wert von ca. 17V an, so erhöht sich der Grenzwert linear bis 3,2A, bis die Brennspannung im Punkt I3A 23V erreicht. Von 23V bis 30V Brennsapnnung bleibt der Grenzwert konstant bei 3,2A. Über 30V Brennspannung wird im Punkt I4A der Grenzwert wieder linear zurückgenommen bis zu einem Grenzwert von 2,8A bei 32V im Punkt I5A. Die Überhöhung des Grenzwerts im Bereich zwischen 22V und 32V dient der Stabilisierung des Plasmabogens der Lampe.

Falls die Detektionseinrichtung beim Erreichen des Punkts I5A noch kein Signal an die Steuereinrichtung gesendet hat, bleibt die Kennlinie A weiterhin gültig. Der Grenzwert bleibt über den Punkt I6A bis zum Punkt I7A zwischen 32V und 53,5V Brennspannung konstant bei einem Wert von 2,8A. Beim Punkt I7A ist ein Zustand erreicht, bei dem die Lampe die Sollleistung von ca. 150W aufnimmt. Steigt die Brennspannung weiter an, so wird der Lampenstrom nicht mehr durch den Grenzwert bestimmt, den die Kennlinie A vorgibt, sondern er folgt der Hyperbel für kontante Leistung, die bis zum Punkt I8C bei einer Brennspannung von 140V angegeben ist.

Hohe Brennspannungen sind ein Indiz für Lampen, die nahe ihrem Lebensdauerende sind. Deshalb besitzten die in Rede stehenden Betriebsgeräte meist eine vorgegebene Schwellspannung für die Brennspannung. Falls diese Schwellspannung für längere Zeit überschritten wird schaltet das Betriebsgerät ab.

Im Punkt I5A spaltet sich die Kennlinie auf. Im Beispiel nach Figur 2 wird nun angenommen, dass zum Zeitpunkt, bei dem die Brennspannung den Punkt I5A erreicht hat, die Detektionseinrichtung an die Steuereinrichtung ein Signal sendet. Dadurch wird eine Kennlinie B aktiviert. Der Grenzwert bei 32V Brennspannung liegt gemäß Kennlinie B bei 3,5A, weshalb ein Sprung vom Punkt I5A zum Punkt I5B erfolgt. Gemäß der Kennlinie B liegt der Grenzwert unabhängig von der Brennspannung bei 3,5A. Steigt die Brennspannung entlang der Kennlinie B weiter an, so trifft sie im Punkt I6B bei ca. 43V auf die Hyperbel für konstante Leistung, bei der wie oben beschrieben die Leistungsregelung zu wirken beginnt.

Im aufgezeigten Beispiel wäre die Brennspannung ohne Umschalten im Punkt I5A von der Kennlinie A zur Kennlinie B nicht mehr wesentlich über 32V angestiegen. Die Lampe hätte die Hyperbel für konstante Leistung und somit ihre Sollleistung nicht erreicht.

Durch die Punkte P1A bis P7A ist die zu den Lampenströmen in den Punkten der Kennlinie A (I1A bis I7A) gehörende Lampenleistung aufgezeigt. Die Punkte P5B und P6B zeigen die Lampenleistungen zu den entprechenden Punkten I5B und I6B der Kennlinie B. Sowie der Lampenstrom die Hyperbel für konstante Leistung erreicht bleibt der Graph für die Lampenleistung bis zum Punkt P8C konstant bei 150W.

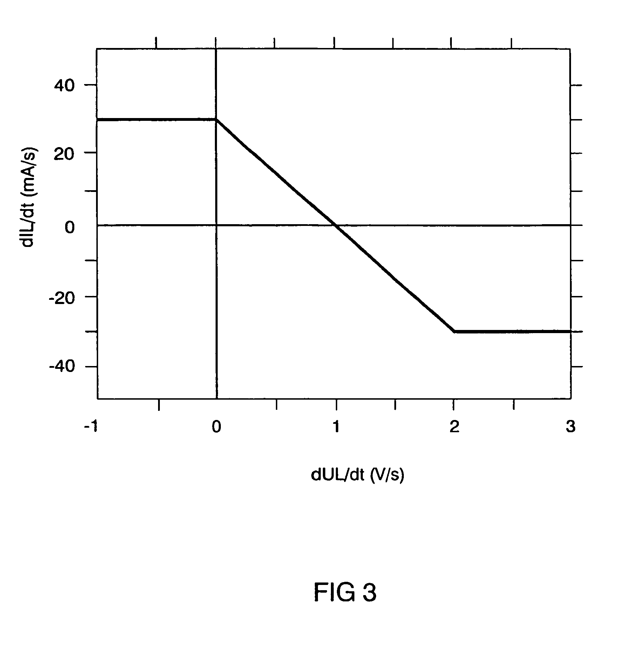

In Figur 3 ist ein Beispiel dafür dargestellt, wie über die Detektionseinrichtung die Änderung der Brennspannung in der Zeit ausgewertet wird und über die Steuereinrichtung eine Änderung des Lampenstroms in der Zeit bewirkt.

Auf der Abszisse ist die Änderung der Brennspannung in der Zeit aufgetragen, die von der Detektionseinrichtung ausgewertet wird. Auf der Ordinate ist die der Lampenstromänderung in der Zeit aufgetragen, die die Steuereinrichtung bei der entsprechenden Änderung der Brennspannung bewirkt.

Dem Beispiel nach Figur 3 ist zu entnehmen, dass in der Anlaufphase der Lampenstrom pro Sekunde um 30 mA erhöht wird, falls sich die Brennspannung nicht ändert. Der Lampenstrom wird auf dem momentanen Wert belassen, falls sich die Brennspannung pro Sekunde um ein Volt erhöht. Der Lampenstrom wird pro Sekunde um 30 mA reduziert, falls sich die Brennspannung pro Sekunde um 2 Volt erhöht.

In Figur 3 ist ein linearer Zusammenhang zwischen Brennspannungsänderung und Lampenstromänderung vorgegeben. Es sind jedoch auch nichtlineare und unstetige Zusammenhänge denkbar.

Sinkt die Brennspannung oder steigt sie schneller als 2 Volt pro Sekunde, so wird eine maximale Änderung von 30 mA pro Sekunde vorgegeben, im ersten Fall steigend, im zweiten Fall fallend. Die maximale Änderung kann je nach Lampentyp und Anwendungsfall von 30 mA pro Sekunde abweichen.

## Patentansprüche

1. Betriebsgerät zum Betrieb von Gasentladungslampen mit folgenden Merkmalen:
• Eine Regeleinrichtung, die dazu geeignet ist, die Leistung (PL) von angeschlossenen Gasentladungslampen auf eine Sollleistung (P8C) zu regeln,
• eine Stelleinrichtung die dazu geeignet ist, einen Lampenstrom von angeschlossenen Gasentladungslampen auf einen Grenzwert (I1A-I7A, I5B-I6B) zu begrenzen,
**dadurch gekennzeichnet, dass** das Betriebsgerät folgende Merkmale umfasst:
• eine Detektionseinrichtung, die so ausgelegt ist, dass sie an die Steuereinrichtung ein Signal abgibt, falls eine Grenzwerteinstellung zu gering ist, um eine angeschlossene Gasentladungslampe in einen Zustand zu versetzen, bei dem die Lampe die Sollleistung (P8C) aufnimmt,
• eine Steuereinrichtung, die der Stelleinrichtung den Grenzwert (I1A-I7A, I5B-I6B) vorgibt und den Grenzwert erhöht (I5A→I5B), falls die Detektionseinrichtung das Signal an die Steuereinrichtung sendet.

2. Betriebsgerät gemäß Anspruch 1 **dadurch gekennzeichnet, dass** die Steuereinrichtung eine über eine Messeinrichtung eine Brennspannung (UL) erfasst und mittels einer abgespeicherten Kennline, den Grenzwert (I1A-I7A, I5B-I6B) in Abhängigkeit von der Brennspannung einstellt.

3. Betriebsgerät gemäß Anspruch 2 **dadurch gekennzeichnet, dass** die Steuereinrichtung bei Empfang eines Signals der Detektionseinrichtung eine weitere abgespeicherte Kennlinie aktiviert.

4. Betriebsgerät gemäß Anspruch 1 **dadurch gekennzeichnet, dass** die Detektionseinrichtung eine Zeitmesseinrichtung enthält, die nach Ablauf einer vorgegebenen Zeit nach einer Zündung einer angeschlossenen Gasentladungslampe ein Signal an die Steuereinrichtung sendet.

5. Betriebsgerät gemäß Anspruch 1 **dadurch gekennzeichnet, dass** die Detektionseinrichtung über eine Messeinrichtung den Anstieg einer Brennspannung (dUL/dt) erfasst und ein Signal an die Steuereinrichtung sendet, falls der Anstieg unter einem vorgegebenem Wert liegt.

6. Betriebsgerät gemäß Anspruch 1 **dadurch gekennzeichnet, dass** die Steuereinrichtung nach dem Empfang eines Signals der Detektionseinrichtung den Grenzwert um einen vorgegebenen Wert erhöht (I5A→I5B).

7. Betriebsgerät gemäß Anspruch 1 **dadurch gekennzeichnet, dass** die Steuereinrichtung nach dem Empfang eines Signals den Grenzwert kontinuierlich auf einen höheren Grenzwert steigert.

8. Betriebsgerät gemäß Anspruch 1 **dadurch gekennzeichnet, dass** Funktionen von Stelleinrichtung, Steuereinrichtung, Detektionseinrichtung und Regeleinrichtung durch mindestens einen Microkontroller ausgeführt werden, wobei diese Funktionen zumindest teilweise durch ein Softwareprogramm realisiert sind.

9. Verfahren zum Betrieb von Gasentladungslampen, das folgende Schritte umfasst:
• Nach einer Zündung der Gasentladungslampe, Regeln der Leistung (PL) der Gasentladungslampe auf eine Sollleistung (P8C),
• Begrenzen des Lampenstroms auf einen Grenzwert (I1A-I7A, 15B-I6B),
• Detektion ob der eingestellte Grenzwert (I1A-I7A, I5B-I6B) für den Lampenstrom die Gasentladungslampe in einen Zustand versetzt, bei dem die Gasentladungslampe die Sollleistung (P8C) aufnimmt;
• Erhöhung des Grenzwerts (I1A-I7A, ISB-I6B) für den Fall, dass detektiert wird, dass der eingestellte Grenzwert (I1A-I7A, ISB-I6B) nicht ausreicht, um die Gasentladungslampe in einen Zustand zu versetzen, bei dem sie die Sollleistung (P8C) aufnimmt;

10. Verfahren gemäß Anspruch 9, **dadurch gekennzeichnet, dass** der Grenzwert (I1A-I7A, ISB-I6B) in Abhängigkeit von einer Brennspannung (UL) eingestellt wir, wobei diese Abhängigkeit aus einer abgespeicherten Kennlinie übernommen wird.

11. Verfahren gemäß Anspruch 9, **dadurch gekennzeichnet, dass** eine Erhöhung des Grenzwerts (I1A-I7A, 15B-I6B) durch Umschalten auf eine weitere abgespeicherte Kennlinie erreicht wird.

## Claims

1. Operating device for operating gas discharge lamps, having the following features:
• a regulation device which is suitable for regulating the power (PL) of connected gas discharge lamps to a desired power (P8C),
• a setting device that is suitable for limiting a lamp current of connected gas discharge lamps to a limit value (I1A-I7A, I5B-I6B),
**characterized in that** the operating device comprises the following features:
• a detection device designed to output a signal to the control device if a limit value setting is too low, in order to put a connected gas discharge lamp into a state in which the lamp assumes the desired power (P8C), and
• a control device that prescribes the limit value (I1A-I7A, I5B-I6B) for the setting device and increases the limit value (I5A → I5B) if the detection device sends a signal to the control device.

2. Operating device according to Claim 1, **characterized in that** the control device detects an arc voltage (UL) via a measuring device and sets the limit value (I1A-I7A, I5B-I6B) as a function of the arc voltage by means of a stored characteristic curve.

3. Operating device according to Claim 2, **characterized in that** the control device activates a further stored characteristic curve upon receiving a signal from the detection device.

4. Operating device according to Claim 1, **characterized in that** the detection device includes a time measuring device which sends a signal to the control device after expiry of a prescribed time following ignition of a connected gas discharge lamp.

5. Operating device according to Claim 1, **characterized in that** the detection device detects the rise in an arc voltage (dUL/dt) via a measuring device and sends a signal to the control device if the rise is below a prescribed value.

6. Operating device according to Claim 1, **characterized in that** after a signal is received from the detection device the control device increases the limit value by a prescribed value (I5A → I5B) .

7. Operating device according to Claim 1, **characterized in that** after a signal is received the control device increases the limit value continuously to a higher limit value.

8. Operating device according to Claim 1, **characterized in that** functions of the setting device, control device, detection device and regulation device are executed by at least one microcontroller, these functions being implemented at least partially by a software program.

9. Method for operating gas discharge lamps that comprises the following steps:
• regulating the power (PL) of the gas discharge lamp to a desired power (P8C), after ignition of the gas discharge lamp,
• limiting the lamp current to a limit value (I1A-I7A, I5B-I6B),
• detecting whether the set limit value (I1A-I7A, I5BI6B) for the lamp current puts the gas discharge lamp into a state in which the gas discharge lamp absorbs the desired power (P8C),
• raising the limit value (I1A-I7A, I5B-I6B) in the case when it is detected that the set limit value (IIA-I7A, I5B-I6B) does not suffice to put the gas discharge lamp into a state in which it absorbs the desired power (P8C).

10. Method according to Claim 9, **characterized in that** the limit value (I1A-I7A, I5B-I6B) is set as a function of an arc voltage (UL), this dependence being adopted from a stored characteristic curve.

11. Method according to Claim 9, **characterized in that** an increase in the limit value (I1A-I7A, I5B-I6B) is achieved by switching over to a further stored characteristic curve.

## Revendications

1. Dispositif pour faire fonctionner des lampes à décharge dans un gaz ayant des caractéristiques suivantes :
• un dispositif de régulation qui est propre à réguler la puissance ( PL ) de lampes à décharge dans un gaz raccordées sur une puissance ( P8C ) de consigne,
• un dispositif de réglage qui est propre à limiter à une valeur ( 11A à 17A, 15B à 16B ) limite un courant dans des lampes à décharge dans un gaz raccordées,
**caractérisé en ce que** le dispositif de fonctionnement comprend des caractéristiques suivantes :
• un dispositif de détection qui est conçu de façon à donner au dispositif de commande un signal dans le cas où un réglage d'une valeur limite est trop petit pour mettre une lampe à décharge dans un gaz raccordée dans un état dans lequel la lampe absorbe la puissance ( P8C ) de consigne,
• un dispositif de commande qui prescrit au dispositif de réglage la valeur ( 11A à 17A, 15B à 16B ) limite et qui augmente la valeur limite ( 15A → 15B ) si le dispositif de détection envoie le signal au dispositif de commande.

2. Dispositif suivant la revendication 1, **caractérisé en ce que** le dispositif de commande relève par un dispositif de mesure une tension ( UL ) d'arc et règle, au moyen d'une courbe caractéristique mise en mémoire, la valeur ( 11A à 17A, 15B à 16B ) limite en fonction de la tension d'arc.

3. Dispositif suivant la revendication 2, **caractérisé en ce que** le dispositif de commande active, à la réception d'un signal du dispositif de détection, une autre courbe caractéristique mise en mémoire.

4. Dispositif suivant la revendication 1, **caractérisé en ce que** le dispositif de détection comporte un dispositif de mesure du temps qui, après l'expiration d'une durée prescrite après un amorçage d'une lampe à décharge dans un gaz raccordé, envoie un signal au dispositif de commande.

5. Dispositif suivant la revendication 1, **caractérisé en ce que** le dispositif de détection relève par un dispositif de mesure l'élévation d'une tension d'arc ( dUL/dt ) et envoie un signal au dispositif de commande si l'élévation est inférieure à une valeur prescrite.

6. Dispositif suivant la revendication 1, **caractérisé en ce que** le dispositif de commande augmente d'une valeur prescrite la valeur limite après la réception d'un signal du dispositif de détection ( 15A → 15B ).

7. Dispositif suivant la revendication 1, **caractérisé en ce que** le dispositif de commande élève en continu la valeur limite d'une valeur limite plus grande après la réception d'un signal.

8. Dispositif suivant la revendication 1, **caractérisé en ce que** des fonctions de dispositif de réglage, de dispositif de commande, de dispositif de détection et de dispositif de régulation sont réalisées par au moins un microcontrôleur, les fonctions étant réalisées au moins en partie par un programme logiciel.

9. Procédé pour faire fonctionner des lampes à décharge dans un gaz qui comprend les stades suivants :
• après un amorçage de la lampe à décharge dans un gaz, on régule la puissance ( PL ) de la lampe à décharge dans un gaz sur une puissance ( P8C ) de consigne,
• on limite le courant de lampe à une valeur ( 11A à 17A, 15B à 16B ) limite,
• on détecte si la valeur ( 11A à 17A, 15B à 16B ) limite réglée pour le courant de lampe met la lampe à décharge dans un gaz dans un état dans lequel la lampe à décharge dans un gaz absorbe la puissance ( P8C ) de consigne,
• on augmente la valeur ( 11A à 17A, 15B à 16B ) limite dans le cas où l'on détecte que la valeur ( 11A à 17A, 15B à 16B ) limite réglée ne suffit pas pour mettre la lampe à décharge dans un gaz dans un état dans lequel elle absorbe la puissance ( P8C ) de consigne.

10. Procédé suivant la revendication 9, **caractérisé en ce que** l'on règle la valeur ( 11A à 17A, 15B à 16B ) limite en fonction d'une tension d'arc ( UL ), cette fonction étant prise en charge dans une courbe caractéristique mise en mémoire.

11. Procédé suivant la revendication 9, **caractérisé en ce que** l'on obtient une augmentation de la valeur ( 11A à 17A, 15B à 16B ) limite en passant sur une autre courbe caractéristique mise en mémoire.
